# EUROPEAN PATENT SPECIFICATION

(11) **EP 2 762 527 B1**
(45) Date of publication and mention of the grant of the patent: **21.03.2018**
(21) Application number: 12834647.5
(22) Date of filing: 06.09.2012
(51) Int. Cl.: C08L 61/06, C08K 7/06, C08L 9/02, C08L 29/14, C08L 31/04, C08L 61/34, C08L 63/00

(54) **MOLDING MATERIAL**
FORMMATERIAL
MATIÈRE À MOULER

(30) Priority: 28.09.2011 JP 2011213088
(43) Date of publication of application: 06.08.2014
(73) Proprietor: Sumitomo Bakelite Company Limited, Shinagawa-ku Tokyo 140-0002 (JP)
(72) Inventor: NISHIMURA, Masaaki, Tokyo 140-0002 (JP)
(74) Representative: Müller, Christian Stefan Gerd
(86) International application number: PCT/JP2012/005645
(87) International publication number: WO 2013/046551

(56) References cited:
- EP-A1- 0 957 129
- JP-A- H0 288 678
- JP-A- 2001 181 519
- JP-A- 2006 507 402
- JP-A- 2008 001 883
- JP-A- 2012 096 370
- DATABASE WPI Week 197932 Thomson Scientific, London, GB; AN 1979-59513B XP002737581, -& SU 630 270 A1 (GUNYAEV G M) 30 October 1978 (1978-10-30)
- DATABASE WPI Week 199015 Thomson Scientific, London, GB; AN 1990-112587 XP002737630, -& JP H02 64132 A (ASAHI ORGANIC CHEM IND) 5 March 1990 (1990-03-05)

## Description

### TECHNICAL FIELD

The present invention relates to a molding material.

### BACKGROUND ART

In recent years, regarding a molded product or a molded part, an attempt to use a resin material instead of a metal material which has been used in the related art has been made from the viewpoints of reducing the weight and cost of a material. In the past, in order to use a molded product or a molded part as a metal substitute, various kinds of resins have been studied. In practice, as a resin material used as a material of a molded product or a molded part, a carbon-resin composite material containing a phenolic resin and a carbon fiber is proposed (for example, Patent Document 1).

In addition, in key industrial fields such as automobile, electrical, and electronic fields, a phenolic resin molding material having superior heat resistance, dimensional stability, and moldability is used as a metal substitute. Among such phenolic resin molding materials, a glass fiber-reinforced phenolic resin is actively studied as a metal substitute from the viewpoints of reducing cost (for example, Patent Document 2).

However, when an existing glass fiber-reinforced phenolic resin molding material is used as a material for a mechanism element, the strength or elastic modulus is insufficient. Therefore, in order to be used as a material for a mechanism element, a phenolic resin molding material having sufficient performance characteristics such as tensile strength, tensile modulus, and toughness is required.

Also the following materials have been described: a molding material containing, based on the material, 7 to 35 wt. % thermosetting resin, 50 to 90 wt. % graphite, and 0.1 to 15 wt. % polyvinyl butyral (cf. Patent Document 3) ; a phenol resin molding material, containing a phenol resin, wollastonite and a carbonaceous substance, characterized by containing, as the carbonous substance, an adherent carbonaceous substance (cf. Patent Document 4); and a material comprising phenol-formaldehyde resin modified with polyvinyl butyral (cf. Patent Document 5).

### RELATED DOCUMENTS

### PATENT DOCUMENTS

[Patent Document 1] Japanese Patent No. 3915045
[Patent Document 2] Japanese Unexamined Patent Publication No. 2005-281364
[Patent Document 3] Japanese Unexamined Patent Publication No. 2001-181519
[Patent Document 4] Japanese Unexamined Patent Publication No. 2008-001883
[Patent Document 5] Soviet Patent Application No. 630270

### DISCLOSURE OF THE INVENTION

The present invention has been made in consideration of the above-described circumstances, an object thereof is to provide a molding material which is well-balanced and superior in strength, toughness, and elastic modulus and has high molding characteristics.

According to the present invention, there is provided a molding material comprising: a phenolic resin; a carbon fiber which is obtained by heating and carbonizing a precursor of an organic fiber and contains carbon in a mass ratio of 90% or higher; and polyvinyl butyral, wherein a content of the phenolic resin is greater than or equal to 40% by weight and less than or equal to 70% by weight with respect to the total weight of the molding material, a content of polyvinyl butyral is greater than or equal to 0.1% by weight and less than or equal to 20% by weight with respect to the total weight of the molding material, a volume average fiber length of the carbon fiber is greater than or equal to 100 µm and less than or equal to 1000 µm, and the phenolic resin is at least one selected from the group consisting of a novolac type phenolic resin, a resol type phenolic resin, and an arylalkylene type phenolic resin which is a phenolic resin containing one or more arylalkylene groups in repeating units.

According to the present invention, it is possible to provide a molding material which is well-balanced and superior in strength, toughness, and elastic modulus and has high molding characteristics.

### DETAILED DESCRIPTION OF THE INVENTION

A molding material according to the present invention includes a phenolic resin, a carbon fiber, and a specific elastomer (polyvinyl butyral), as specified above. By adopting such a configuration, a molding material, which is well-balanced and superior in strength, toughness, and elastic modulus and has high molding characteristics, can be provided. The reason is not entirely clear, but is considered to be as described below. First, the molding material according to the present invention contains the specific elastomer. It is considered that, by selecting and containing the specific elastomer along with the carbon fiber as described above, the elastic modulus is improved, and the balance between toughness and strength is superior at a high level. In addition, it is considered that, by containing both the specific elastomer and the phenolic resin, toughness can be improved. As described above, in the molding material according to the present invention, the specific elastomer, the phenolic resin, and the carbon fiber are used in combination. As a result, it is considered that, due to a synergistic effect of the above-described elements, strength, toughness, and elastic modulus can be improved in a good balance.

The phenolic resin in the molding material according to the present invention is at least one selected from the group consisting of a novolac type phenolic resin, a resol type phenolic resin, and an arylalkylene type phenolic resin. With such a configuration, a molding material which is further well-balanced and superior in strength, toughness, and elastic modulus can be obtained.

A method of producing the novolac type phenolic resin is not particularly limited. For example, the novolac type phenolic resin can be obtained by causing phenols and aldehydes to react with each other in the presence of an acidic catalyst.

Examples of the phenols used for producing the novolac type phenolic resin include phenol, cresol, xylenol, ethylphenol, p-phenylphenol, p-tert-butylphenol, p-tert-amylphenol, p-octylphenol, p-nonylphenol, p-cumylphenol, bisphenol A, bisphenol F, and resorcinol. These phenols may be used alone or in combination of two or more kinds.

In addition, examples of the aldehydes used for producing the novolac type phenolic resin include alkylaldehydes such as formaldehyde, acetaldehyde, propylaldehyde, and butylaldehyde; and aromatic aldehydes such as benzaldehyde and salicylaldehyde. Examples of a source of formaldehyde include formalin (aqueous solution), paraformaldehyde, hemiformal with alcohols, and trioxane. These aldehydes may be used alone or in a combination of two or more kinds.

When the novolac type phenolic resin is synthesized, regarding a reaction molar ratio of the phenols and the aldehydes, the molar weight of the aldehyde is typically 0.3 mol to 1.0 mol and particularly preferably 0.6 mol to 0.9 mol with respect to 1 mol of the phenol.

In addition, examples of the acidic catalyst used for producing the novolac type phenolic resin include organic carboxylic acids such as oxalic acid and acetic acid; organic sulfonic acids such as benzenesulfonic acid, para-toluenesulfonic acid, and methanesulfonic acid; organic phosphonic acids such as 1-hydroxyethylidene-1,1'-diphosphonic acid and 2-phosphonobutane-1,2,4-tricarboxylic acid; and inorganic acids such as hydrochloric acid, sulfuric acid, and phosphoric acid. These acid catalysts may be used alone or in a combination of two or more kinds.

Next, a method of producing the resol type phenolic resin is not particularly limited. For example, the resol type phenolic resin can be obtained by causing phenols and aldehydes to react with each other in the presence of a catalyst such as an alkali metal, an amine, or a divalent metal salt.

Examples of the phenols used for producing the resol type phenolic resin include phenol; cresols such as o-cresol, m-cresol, and p-cresol; xylenols such as 2,3-xylenol, 2,4-xylenol, 2,5-xylenol, 2,6-xylenol, 3,4-xylenol, and 3,5-xylenol; ethylphenols such as o-ethylphenol, m-ethylphenol, and p-ethylphenol; butylphenols such as isopropylphenol, butylphenol, and p-tert-butylphenol; alkylphenols such as p-tert-amylphenol, p-octylphenol, p-nonylphenol, and p-cumylphenol; halogenated phenols such as fluorophenol, chlorophenol, bromophenol, and iodophenol; monovalent phenol-substituted compounds such as p-phenylphenol, aminophenol, nitrophenol, dinitrophenol, and trinitrophenol; monovalent phenols such as 1-naphthol and 2-naphthol; and polyvalent phenols such as resorcin, alkylresorcin, pyrogallol, catechol, alkylcatechol, hydroquinone, alkylhydroquinone, phloroglucin, bisphenol A, bisphenol F, bisphenol S, and dihydroxynaphthalene. These phenols may be used alone or as a mixture of two or more kinds. In addition, among the phenols, phenol, cresols, and bisphenol A which are economically advantageous are preferably selected and used.

Examples of the aldehydes used for producing the resol type phenolic resin include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allyl aldehyde, benzaldehyde, crotonaldehyde, acrolein, tetraoxymethylene, phenylacetaldehyde, o-tolualdehyde, and salicylaldehyde. These aldehydes may be used alone or in a combination of two or more kinds. Among these aldehydes, formaldehyde and paraformaldehyde are preferably selected and used from the viewpoints of high reactivity and low cost.

In addition, examples of the catalyst used for producing the resol type phenolic resin include hydroxides of alkali metals such as sodium hydroxide, lithium hydroxide, and potassium hydroxide; oxides and hydroxides of alkali earth metals such as calcium, magnesium, and barium; amines such as sodium carbonate, ammonia water, triethylamine, and hexamethylenetetramine; and divalent metal salts such as magnesium acetate and zinc acetate. These catalysts may be used alone or in a combination of two or more kinds.

When the resol type phenolic resin is produced, regarding a reaction molar ratio of the phenols and the aldehydes, the molar weight of the aldehydes is preferably 0.8 mol to 2.50 mol and more preferably 1.00 mol to 2.30 mol with respect to 1 mol of the phenols. When the reaction molar ratio of the phenols and the aldehydes is lower than the lower limit, a resol type resin may not be obtained. When the reaction molar ratio is higher than the upper limit, the reaction control is difficult.

Next, the arylalkylene type phenolic resin refers to a phenolic resin containing one or more arylalkylene groups in repeating units. Examples of the arylalkylene type phenolic resin include a xylylene type phenolic resin and a biphenyl dimethylene type phenolic resin. Among these, a biphenyl dimethylene type phenolic resin is preferably used. As a result, the obtained molding material can be improved in strength.

The content of the phenolic resin in the molding material according to the present invention is greater than or equal to 40% by weight and less than or equal to 70% by weight and preferably greater than or equal to 40% by weight and less than or equal to 55% by weight with respect to the total weight of the molding material. As a result, the obtained molding material can be further improved in strength. When the content of the phenolic resin in the molding material is greater than the upper limit, blistering may occur in the obtained molded product. In addition, when the content of the phenolic resin in the molding material is less than the lower limit, a long time is required for the curing of the phenolic resin, which may cause insufficient curing.

Next, the carbon fiber in the molding material according to the present invention will be described. First, the carbon fiber refers to a fiber which is obtained by heating and carbonizing a precursor of an organic fiber and contains carbon in a mass ratio of 90% or higher. This carbon fiber has characteristics in that the weight thereof is light, and the strength per unit weight (hereinafter, also referred to as "specific strength") is superior. Therefore, it is considered that, when the carbon fiber is used for the molding material, the strength and elastic modulus of the molding material can be improved. However, the carbon fiber is likely to be bent when being kneaded with other materials. Therefore, in order to exhibit the effects of the carbon fiber, it is necessary that the materials which are kneaded with the carbon fiber, and the kind and shape (fiber length) of the carbon fiber be appropriately selected according to performance required for the molding material.

It is preferable that the carbon fiber in the molding material according to the present invention be a pitch-based carbon fiber or a PAN-based carbon fiber. In addition, these carbon fibers may be used alone or in a combination of two or more kinds. Further, the shape of the carbon fiber is not particularly limited, but is preferably, for example, circular. As a result, the strength and the elastic modulus of the obtained molding material can be improved in a better balance.

In addition, the content of the carbon fiber in the molding material according to the present invention is preferably greater than or equal to 20% by weight and less than or equal to 55% by weight and more preferably greater than or equal to 40% by weight and less than or equal to 55% by weight with respect to the total weight of the molding material. As a result, a molding material in which moldability is superior and strength and elastic modulus are improved in a better balance can be obtained. When the content of the carbon fiber in the molding material is greater than the upper limit, the surface state of the obtained molded product may deteriorate. In addition, when the content of the carbon fiber in the molding material is less than the lower limit, a molded product having insufficient mechanical properties such as strength and elastic modulus is obtained.

In addition, the fiber diameter of the carbon fiber in the molding material according to the present invention is preferably greater than or equal to 5 µm and less than or equal to 13 µm and more preferably greater than or equal to 6 µm and less than or equal to 10 µm. As a result, a molding material in which strength, toughness, and elastic modulus are improved in a better balance can be obtained.

In addition, the volume average fiber length of the carbon fiber in the molding material according to the present invention is greater than or equal to 100 µm and less than or equal to 1000 µm and preferably greater than or equal to 150 µm and less than or equal to 500 µm. As a result, the elastic modulus of the obtained molding material can be further improved. "Volume average fiber length" described herein refers to a fiber length which is measured using an image analyzer by baking the molding material or dissolving the molding material in acetone to remove resin components, dispersing a fiber in a glass plate, and imaging the fiber using an optical microscope.

In addition, the number average fiber length of the carbon fiber in the molding material according to the present invention is preferably greater than or equal to 50 µm and less than or equal to 500 µm and more preferably greater than or equal to 100 µm and less than or equal to 300 µm. As a result, the strength of the obtained molding material can be further improved. "Number average fiber length" described herein refers to a fiber length which is measured using an image analyzer by baking the molding material or dissolving the molding material in acetone to remove resin components, dispersing a fiber in a glass plate, and imaging the fiber using an optical microscope.

In addition, a ratio "volume average fiber length / number average fiber length" which is a ratio of the volume average fiber length and the number average fiber length is preferably greater than or equal to 1 and less than or equal to 5 and more preferably greater than or equal to 1.2 and less than or equal to 3. As a result, a molding material in which strength and elastic modulus are improved in a better balance can be obtained.

The fiber length of the carbon fiber is decreased through various processes of a method of producing the molding material described below such as preparing, mixing, heat-melt kneading, and pulverizing. The volume average fiber length and the number average fiber length of the carbon fiber define values relating to the carbon fiber contained in the molding material obtained through various processes.

The molding material according to the present invention contains the elastomer polyvinyl butyral. Additional suitable elastomers are vinyl acetate and acrylonitrile butadiene rubber. As the elastomer, these three elastomers may be used in a combination of two or more kinds. That is, in the molding material according to the present invention, the three elastomers are selectively used among various elastomers which are generally known. The reason is that, as described above, when the elastomer is used in combination with the carbon material and the phenolic resin, the most effective combination of elastomers for exhibiting characteristics of various components is a combination of the three elastomers of polyvinyl butyral, vinyl acetate, and acrylonitrile butadiene rubber.

As the elastomer in the molding material according to the present invention, polyvinyl butyral is used. As a result, a molding material in which strength, toughness, and elastic modulus are improved in a better balance can be obtained. The reason is that, usually, when being used for the molding material, polyvinyl butyral can improve the toughness and flexibility of the molding material. Therefore, it is considered that, by using polyvinyl butyral in combination with the carbon fiber and the phenolic resin as components contained in the molding material, toughness and strength are improved in a good balance, and the balance between strength, toughness, and elastic modulus can be controlled at a high level due to a synergistic effect with the carbon fiber.

In addition, the content of polyvinyl butyral in the molding material according to the present invention is greater than or equal to 0.1% by weight and less than or equal to 20 mass% and more preferably greater than or equal to 2% by weight and less than or equal to 8 mass% with respect to the total weight of the molding material. As a result, a molding material in which moldability is superior and strength and elastic modulus are improved in a better balance can be obtained.

The molding material according to the present invention may optionally further contain other components such as a releasing agent, a lubricant, a curing assistant, a pigment, an inorganic filler, other elastomers, and a glass fiber.

The inorganic filler optionally contained in the molding material according to the present invention is not particularly limited, and examples thereof include silicates such as talc, calcined clay, non-calcined clay, and mica; oxides such as titanium oxide, alumina, silica, and fused silica; carbonates such as calcium carbonate, magnesium carbonate, and hydrotalcite; hydroxides such as aluminum hydroxide, magnesium hydroxide, and calcium hydroxide; sulfates or sulfites such as barium sulfate, calcium sulfate, and calcium sulfite; borates such as zinc borate, barium metaborate, aluminum borate, calcium borate, and sodium borate; and nitrides such as aluminum nitride, boron nitride, and silicon nitride, and glass fibers. Among these inorganic fillers, glass fibers are preferable. By using a glass fiber as the inorganic fiber, the mechanical strength of a molded product can be maintained.

In addition, a glass constituting the glass fiber is not particularly limited, and examples thereof include E glass, C glass, A glass, S glass, D glass, NE glass, T glass, and H glass. Among these glasses, E glass, T glass, or S glass is preferable. As a result, a highly elastic glass fiber can be achieved, and a thermal expansion coefficient can be decreased.

Examples of other elastomers include an acrylic acid-alkyl styrene copolymer, a styrene-isoprene copolymer, an isoprene rubber, a styrene-butadiene copolymer, an ether-urethane copolymer, a methyl-urethane copolymer, an ester-urethane copolymer, a vinyl-silicone copolymer, a phenyl-silicone copolymer, and a chloroprene copolymer.

A method of producing the molding material according to the present invention will be described. The method of producing the molding material according to the present invention is not particularly limited. For example, the molding material can be produced using the following method. First, the phenolic resin, the carbon fiber, and the elastomer are mixed with each other. Next, the mixture is heat-melt kneaded using a pressure kneader, a twin screw extruder, and a heating roller, and the kneaded material is pulverized using a power mill. As a result, the molding material according to the present invention can be obtained. In addition, by applying the obtained molding material to injection molding, transfer molding, and compression molding, a molded product having a desired shape can be obtained.

In addition, the molding material according to the present invention can be used as a metal substitute as described in the section "BACKGROUND ART". For example, the molding material according to the present invention is used as a substitute of an aluminum component relating to die casting.

As described above, the molding material according to the present invention may be produced under the assumption that it will be used as a metal substitute. Therefore, it is preferable that the molding material be used such that the tensile strength and the tensile modulus of a cured material, which is obtained by curing the molding material, are defined to be high according to the use. As a result, the balance between strength, toughness, and elastic modulus can be controlled at a high level, and a superior molding material in which molding characteristics as a metal substitute are further improved can be obtained. Hereinafter, this point will be described.

In the following, the results of a tensile test according to JIS K6911 using a test specimen will be described as an example, the test specimen being prepared by curing the molding material under curing conditions of a mold temperature of 175°C and a curing time of 1 minute to obtain a dumbbell-shaped cured material of the molding material and further curing the cured material of the molding material under conditions of 180°C and 6 hours.

In the molding material according to the present invention, it is preferable that, when the tensile test is performed under conditions of 150°C and 25°C, a ratio S₁₅₀ / S₂₅ of a tensile strength S₁₅₀ to a tensile strength S₂₅ is preferably greater than or equal to 0.6 and less than or equal to 1, and more preferably greater than or equal to 0.7 and less than or equal to 1. As a result, as compared to a molding material of the related art, a tensile strength can be improved, and the balance between strength and elastic modulus and the balance between strength and toughness can be controlled at a high level. A breaking strength described herein refers to a strength which is applied to a test specimen when the test specimen is broken.

In addition, when the tensile test is performed under conditions of 25°C, the elastic modulus of the molding material according to the present invention is preferably greater than or equal to 20 GPa and less than or equal to 70 GPa and more preferably greater than or equal to 30 GPa and less than or equal to 70 GPa. As a result, as compared to a molding material of the related art, a tensile modulus can be improved, and the balance between elastic modulus and strength, and the balance between elastic modulus and toughness can be controlled at a high level. The elastic modulus can be obtained from a slope of a line of a linear region immediately after the start of pulling in a stress-strain curve during the tensile test.

Since the molding material according to the present invention contains a resin, the density thereof is low as compared to a metal material or a plastic material of the related art. Therefore, values of a specific tensile strength and a specific tensile modulus representing a strength and an elastic modulus per unit density are extremely high as compared to those of a molding material of the related art.

That is, as compared to a molding material of the related art, the molding material according to the present invention is well-balanced and superior in strength, toughness, and elastic modulus, has high molding characteristics, and is superior in strength and elastic modulus per unit density.

Specifically, the specific tensile strength at 25°C of the molding material according to the present invention is preferably greater than or equal to 100 MPa/(g/cm³) to less than or equal to 300 MPa/(g/cm³) and more preferably greater than or equal to 120 MPa/(g/cm³) to less than or equal to 300 MPa/(g/cm³).

In addition, the specific tensile modulus at 25°C of the molding material according to the present invention is preferably greater than or equal to 15 GPa/ (g/cm³) to less than or equal to 50 GPa/ (g/cm³) and more preferably greater than or equal to 20 GPa/(g/cm³) to less than or equal to 50 GPa/(g/cm³).

### Examples

Those examples which are not encompassed by the appended claims are given for comparative purposes only. Components which were used in Examples and Comparative Examples are shown below.

(1) Phenolic resin (novolac type phenolic resin): A-1082G, manufactured by Sumitomo Bakelite Co., Ltd.
(2) Carbon fiber (PAN-based) : HT C261 6 mm, manufactured by Toho Tenax Co., Ltd.
(3) Carbon fiber (pitch-based): DIALEAD K223SE, manufactured by Mitsubishi Plastics Inc.
(4) Glass fiber: E glass fiber, manufactured by Nitto Boseki Co., Ltd.
(5) Polyvinyl butyral: S-LEC BL-1, manufactured by Sekisui Chemical Co., Ltd.
(6) Vinyl acetate: GOSENYL PV-500, manufactured by The Nippon Synthetic Chemical Industry Co., Ltd.
(7) Acrylonitrile butadiene rubber: SBP-4300, manufactured by JSR Corporation
(8) Curing agent (hexamethylenetetramine): UROTROPINE, manufactured by Sumitomo Seika Chemicals Co., Ltd.
(9) Curing assistant: Magnesium oxide
(10) Releasing agent: calcium stearate
(11) Colorant: Carbon black

### (Examples and Comparative Examples)

Regarding Examples 1 to 4 (Examples 2 and 3 are reference examples) and Comparative Examples 1 and 2, a based mixture obtained by mixing the respective components according to the mixing amounts shown in Table 1 below was melt-kneaded for 3 minutes using a heating roller at 90°C and was taken out and pulverized into a granular shape to obtain a molding material. All the amounts of the components shown in Table 1 below are represented by % by weight.

Regarding molding materials obtained according to the mixing ratios shown in Table 1 below, the following measurement and evaluation were performed.

In Examples 1 to 4 and Comparative Examples 1 and 2, in order to obtain a cured material of the molding material, curing conditions of a mold temperature of 175°C and a curing time of 1 minute were used. In addition, a test specimen of the cured material of the molding material which was used for the following measurement was obtained by injection-molding into a shape according to JIS K6911 and additional curing under conditions of 180°C and 6 hours.

In addition, in Examples 1 to 4 and Comparative Examples 1 and 2, the mixing ratios of the respective components are collectively shown in Table 1 below.

### (Evaluation Items)

Tensile strength: The above-described test specimen was tested in a tensile test according to JIS K6911 under conditions of 25°C or 150°C. The tensile strength described herein refers to a tensile load or strength required for breaking the test specimen. In these examples, the tensile strength was calculated with the following method. First, when the test specimen is broken, a stress applied to the test specimen is represented by σ, and a minimum cross-sectional area of the test specimen is represented by S. A breaking strength refers to a strength which is applied to a test specimen when the test specimen is broken. The unit is MPa.

Elastic modulus: The above-described test specimen was tested in a tensile test according to JIS K6911 under conditions of 25°C. The unit of the elastic modulus is GPa.

In addition, in these examples, a specific tensile strength obtained by dividing the tensile strength by the density; and a specific tensile modulus obtained by dividing the tensile modulus by the density were calculated based on the values of the above-described evaluation results . The density was calculated using a method according to JIS R7601.

Number average fiber length and volume average fiber length: The obtained molding material was baked to remove resin components, a fiber was dispersed in a glass plate, and the fiber was imaged using an optical microscope. An image obtained as above was analyzed using an image analyzer to measure a fiber length. The unit of the number average fiber length and the volume average fiber length is µm.

The evaluation results relating to the above-described evaluation items are shown in Table 1 below along with the mixing ratios (% by weight) of the respective components.

**[Table 1]**

| | | Ex. | | | | Comp. Ex. | |
|---|---|---|---|---|---|---|---|
| | | Ex. 1 | Ex. 2 | Ex. 3 | Ex. 4 | Comp. Ex. 1 | Comp. Ex. 2 |
| Mixing Composition | Phenolic Resin | 40.0 | 40.0 | 40.0 | 40.0 | 40.0 | 44.3 |
| | Carbon Fiber (PAN-Based) | 45 | 45 | 45 | - | - | 45 |
| | Carbon Fiber (Pitch-Based) | - | - | - | 45 | - | - |
| | Glass Fiber | - | - | - | - | 45 | - |
| | Polyvinyl Butyral | 5 | - | - | 5 | 5 | - |
| | Vinyl Acetate | - | 5 | - | - | - | - |
| | Acrylonitrile Butadiene Rubber | - | - | 5 | - | - | - |
| | Curing Agent (Hexamethylenetetramine) | 7.0 | 7.0 | 7.0 | 7.0 | 7.0 | 7.7 |
| | Curing Assistant (Magnesium Oxide) | 1 | 1 | 1 | 1 | 1 | 1 |
| | Releasing Agent | 1 | 1 | 1 | 1 | 1 | 1 |
| | Colorant | 1 | 1 | 1 | 1 | 1 | 1 |
| Total | | 100 | 100 | 100 | 100 | 100 | 100 |
| Evaluation Result | Density (g/cm³) | 1.45 | 1.45 | 1.45 | 1.45 | 1.70 | 1.45 |
| | Tensile Strength (25°C) (MPa) | 205 | 200 | 190 | 180 | 120 | 150 |
| | Tensile Strength (150°C) (MPa) | 160 | 140 | 150 | 140 | 70 | 120 |
| | Tensile Strength (150°C) (MPa) / Tensile Strength (25°C) (MPa) | 0.78 | 0.70 | 0.79 | 0.78 | 0.58 | 0.80 |
| | Tensile Modulus (25°C) (GPa) | 32.0 | 31.0 | 30.0 | 34.0 | 19.0 | 30.0 |
| | Tensile Modulus (150°C) (GPa) | 29.0 | 27.0 | 28.0 | 29.0 | 13.0 | 28.0 |
| | Specific Tensile Strength (25°C) (MPa/(g/cm³)) | 141 | 138 | 131 | 124 | 71 | 103 |
| | Specific Tensile Modulus (25°C) (GPa/(g/cm³)) | 22.1 | 21.4 | 20.7 | 23.4 | 11.2 | 20.7 |
| | Number Average Fiber Length of Carbon Fiber (µm) | 100 | 100 | 100 | 50 | 100 | 100 |
| | Volume Average Fiber Length of Carbon Fiber (µm) | 150 | 150 | 150 | 100 | 150 | 150 |

As can be seen from Table 1, the molding materials of Examples 1 to 4 were superior in specific strength and specific modulus as compared to all the values of Comparative Examples. Actually, when being manufactured using the molding materials of the Examples, a mechanism element which was well-balanced and superior in strength, toughness, and elastic modulus and had high molding characteristics was obtained.

## Claims

1. A molding material comprising:
a phenolic resin;
a carbon fiber which is obtained by heating and carbonizing a precursor of an organic fiber and contains carbon in a mass ratio of 90% or higher; and
polyvinyl butyral,
wherein a content of the phenolic resin is greater than or equal to 40% by weight and less than or equal to 70% by weight with respect to the total weight of the molding material,
a content of polyvinyl butyral is greater than or equal to 0.1% by weight and less than or equal to 20% by weight with respect to the total weight of the molding material,
a volume average fiber length of the carbon fiber is greater than or equal to 100 µm and less than or equal to 1000 µm, and
the phenolic resin is at least one selected from the group consisting of a novolac type phenolic resin, a resol type phenolic resin, and an arylalkylene type phenolic resin which is a phenolic resin containing one or more arylalkylene groups in repeating units.

2. The molding material according to claim 1,
wherein the carbon fiber is a pitch-based or PAN-based carbon fiber.

3. The molding material according to claim 1 or 2,
wherein a content of the carbon fiber is greater than or equal to 20% by weight and less than or equal to 55% by weight with respect to the total weight of the molding material.

4. The molding material according to any one of claims 1 to 3,
wherein a number average fiber length of the carbon fiber is greater than or equal to 50 µm and less than or equal to 500 µm.

5. The molding material according to any one of claims 1 to 4,
wherein a ratio "volume average fiber length / number average fiber length" which is a ratio of a volume average fiber length of the carbon fiber and a number average fiber length of the carbon fiber is greater than or equal to 1 and less than or equal to 5.

6. The molding material according to any one of claims 1 to 5,
wherein when a test specimen is prepared by curing the molding material under curing conditions of a mold temperature of 175°C and a curing time of 1 minute to obtain a dumbbell-shaped cured material of the molding material and further curing the cured material of the molding material under conditions of 180°C and 6 hours, and a tensile test is performed according to JIS K6911,
a ratio S₁₅₀ / S₂₅ of a tensile strength S₁₅₀ at 150°C of the test specimen to a tensile strength S₂₅ at 25°C of the test specimen is greater than or equal to 0.6 and less than or equal to 1.

7. The molding material according to claim 6,
wherein a tensile modulus determined by the test according to JIS K6911 at 25°C of the cured material of the molding material is greater than or equal to 25 GPa and less than or equal to 70 GPa.

8. The molding material according to claim 6 or 7,
wherein a tensile strength determined by the test according to JIS K6911 at 25°C of the cured material of the molding material is greater than or equal to 150 MPa and less than or equal to 300 MPa.

9. The molding material according to any one of claims 1 to 8,
wherein a content of polyvinyl butyral is greater than or equal to 2% by weight and less than or equal to 8% by weight with respect to the total weight of the molding material.

## Patentansprüche

1. Formmaterial, umfassend:
ein Phenolharz;
eine Kohlenstofffaser, die durch Erhitzen und Carbonisieren einer Vorstufe einer organischen Faser erhalten wird und Kohlenstoff in einem Massenverhältnis von 90% oder höher enthält; und
Polyvinylbutyral,
wobei ein Gehalt des Phenolharzes größer als oder gleich zu 40% nach Gewicht und kleiner als oder gleich zu 70% nach Gewicht hinsichtlich des Gesamtgewichts des Formmaterials ist,
ein Gehalt von Polyvinylbutyral größer als oder gleich zu 0,1% nach Gewicht und kleiner als oder gleich zu 20% nach Gewicht hinsichtlich des Gesamtgewichts des Formmaterials ist,
eine volumengemittelte Faserlänge der Kohlenstofffaser größer als oder gleich zu 100 µm und kleiner als oder gleich zu 1000 µm ist, und
das Phenolharz mindestens eines ist, das aus der Gruppe ausgewählt ist, die aus einem Novolak-artigen Phenolharz, einem Resol-artigen Phenolharz und einem Arylalkylen-artigen Phenolharz, das ein Phenolharz ist, das eine oder mehrere Arylalkylengruppen in Wiederholungseinheiten enthält, besteht.

2. Formmaterial gemäß Anspruch 1,
wobei die Kohlenstofffaser eine auf Pech basierende oder auf PAN basierende Kohlenstofffaser ist.

3. Formmaterial gemäß Anspruch 1 oder 2,
wobei ein Gehalt der Kohlenstofffaser größer als oder gleich zu 20% nach Gewicht und kleiner als oder gleich zu 55% nach Gewicht hinsichtlich des Gesamtgewichts des Formmaterials ist.

4. Formmaterial gemäß einem jeglichen der Ansprüche 1 bis 3,
wobei eine zahlengemittelte Faserlänge der Kohlenstofffaser größer als oder gleich zu 50 µm und kleiner als oder gleich zu 500 µm ist.

5. Formmaterial gemäß einem jeglichen der Ansprüche 1 bis 4,
wobei ein Verhältnis "volumengemittelte Faserlänge / zahlengemittelte Faserlänge", das das Verhältnis einer volumengemittelten Faserlänge der Kohlenstofffaser und
einer zahlengemittelten Faserlänge der Kohlenstofffaser ist, größer als oder gleich zu 1 und kleiner als oder gleich zu 5 ist.

6. Formmaterial gemäß einem jeglichen der Ansprüche 1 bis 5,
wobei, wenn ein Testexemplar durch Härten des Formmaterials unter Härtungsbedingungen einer Werkzeugtemperatur von 175°C und einer Härtungszeit von 1 Minute zum Erhalten eines hantelförmigen gehärteten Materials des Formmaterials und weiteres Härten des gehärteten Materials des Formmaterials unter Bedingungen von 180°C und 6 Stunden hergestellt wird und ein Zugversuch gemäß JIS K6911 durchgeführt wird,
ein Verhältnis S₁₅₀ / S₂₅ einer Zugfestigkeit S₁₅₀ bei 150°C des Testexemplars zu einer Zugfestigkeit S₂₅ bei 25°C des Testexemplars größer als oder gleich zu 0,6 und kleiner als oder gleich zu 1 ist.

7. Formmaterial gemäß Anspruch 6,
wobei ein Zugmodul, bestimmt durch den Test gemäß JIS K6911 bei 25°C, des gehärteten Materials des Formmaterials größer als oder gleich zu 25 GPa und kleiner als oder gleich zu 70 GPa ist.

8. Formmaterial gemäß Anspruch 6 oder 7,
wobei eine Zugfestigkeit, bestimmt durch den Test gemäß JIS K6911 bei 25°C, des gehärteten Materials des Formmaterials größer als oder gleich zu 150 MPa und kleiner als oder gleich zu 300 MPa ist.

9. Formmaterial gemäß einem jeglichen der Ansprüche 1 bis 8,
wobei ein Gehalt von Polyvinylbutyral größer als oder gleich zu 2% nach Gewicht und kleiner als oder gleich zu 8% nach Gewicht hinsichtlich des Gesamtgewichts des Formmaterials ist.

## Revendications

1. Matière à mouler comprenant:
une résine phénolique;
une fibre de carbone qui est obtenue par chauffage et carbonisation d'un précurseur d'une fibre organique et contient du carbone dans un rapport en masse de 90% ou plus; et
du polyvinyl butyral,
tandis que la teneur en résine phénolique est supérieure ou égale à 40% en poids et inférieure ou égale à 70% en poids par rapport au poids total de la matière à mouler,
la teneur en polyvinyl butyral est supérieure ou égale à 0,1% en poids et inférieure ou égale à 20% en poids par rapport au poids total de la matière à mouler,
la longueur moyenne des fibres en volume de la fibre de carbone est supérieure ou égale à 100 µm et inférieure ou égale à 1000 µm, et
la résine phénolique est au moins une résine choisie dans le groupe consistant en une résine phénolique de type novolac, une résine phénolique de type résol, et une résine phénolique de type arylalkylène qui est une résine phénolique contenant un ou plusieurs groupes arylalkylène dans des unités répétées.

2. Matière à mouler selon la revendication 1,
dans laquelle la fibre de carbone est une fibre de carbone à base de brai ou à base de PAN.

3. Matière à mouler selon la revendication 1 ou 2,
dans laquelle la teneur de la fibre de carbone est supérieure ou égale à 20% en poids et inférieure ou égale à 55% en poids par rapport au poids total de la matière à mouler.

4. Matière à mouler selon l'une quelconque des revendications 1 à 3,
dans laquelle la longueur moyenne des fibres en nombre de la fibre de carbone est supérieure ou égale à 50 µm et inférieure ou égale à 500 µm.

5. Matière à mouler selon l'une quelconque des revendications 1 à 4,
dans laquelle le rapport "longueur moyenne des fibres en volume / longueur moyenne des fibres en nombre" qui est un rapport d'une longueur moyenne en volume de fibres et d'une longueur moyenne en nombre des fibres de la fibre de carbone est supérieur ou égale à 1 et inférieur ou égal à 5.

6. Matière à mouler selon l'une quelconque des revendications 1 à 5,
dans laquelle lorsqu'un spécimen de test est préparé par durcissement de la matière à mouler dans des conditions de durcissement d'une température en moule de 175°C et une durée de durcissement de 1 minute pour obtenir une matière durcie en forme d'haltère de la matière à mouler et poursuite du durcissement de la matière durcie de la matière à mouler dans des conditions de 180°C et 6 heures, et qu'un test de traction est effectué selon JIS K6911,
un rapport S₁₅₀ / S₂₅ d'une résistance à la traction S₁₅₀ à 150°C du spécimen de test sur une résistance à la traction S₂₅ à 25°C du spécimen de test est supérieur ou égal à 0,6 et inférieur ou égal à 1.

7. Matière à mouler selon la revendication 6,
dans laquelle un module de traction déterminé par le test selon JIS K6911 à 25°C de la matière durcie de la matière à mouler est supérieur ou égale à 25 GPa et inférieur ou égale à 70 GPa.

8. Matière à mouler selon la revendication 6 ou 7,
dans laquelle une résistance à la traction déterminée par le test selon JIS K6911 à 25°C de la matière durcie de la matière à mouler est supérieure ou égale à 150 MPa et inférieure ou égale à 300 MPa.

9. Matière à mouler selon l'une quelconque des revendications 1 à 8,
dans laquelle une teneur en polyvinyl butyral est supérieure ou égale à 2% en poids et inférieure ou égale à 8% en poids par rapport au poids total de la matière à mouler.
